# EUROPEAN PATENT SPECIFICATION

(11) **EP 2 426 945 B1**
(45) Date of publication and mention of the grant of the patent: **28.02.2018**
(21) Application number: 10009140.4
(22) Date of filing: 02.09.2010
(51) Int. Cl.: H04Q 1/02, H04Q 1/10, H05K 5/03

(54) **Enclosure**
Gehäuse
Enceinte

(43) Date of publication of application: 07.03.2012
(73) Proprietor: CommScope Connectivity Belgium BVBA, 3010 Kessel-Lo (BE)
(72) Inventor: Vos, Bart, 2440 Geel (BE); Van Meeuwen, Bart, 3520 Zonhoven (BE); Verbruggen, Rudi, 3220 Holsbeek (BE)
(74) Representative: Grünecker Patent- und Rechtsanwälte PartG mbB

(56) References cited:
- GB-A- 2 138 213
- US-A1- 2007 215 616
- US-B1- 6 510 960

## Description

The present invention relates to an enclosure. In particular, the present invention relates to an enclosure comprising a frame defining an organizing section and a cover adopted to be mountable on said frame. The organizing section may comprise at least one receptacle for a cable and the frame may likewise define a mounting section, which mounting section usually is used to mount electric or electronic components inside the enclosure. The at least one receptacle for a cable might hold a cable as such. However, in an enclosure, the cable going out of the enclosure to a customer is usually connected to a cable going into the enclosure, which cable is a central transmitting cable to transmit data, like telephone data, video signals, or the like via rather long distances. In other words, the enclosure of the present invention is an enclosure, which is adapted to hold and cover electric or electronic components on the one hand, and cables, in particular connecting elements connecting those cables to others and/or the electric or electronic components on the other hand. US6510960 discloses an enclosure comprising a cover, in which a cover door is slidably held, which cover door is adapted to either close or open an opening received within the cover. US 6,610,960 discloses an enclosure comprising a cover, in which a cover door is slidably held. The cover door is slidably held within the cover, which cover provides guide rails adapted to receive the cover door. The cover door is provided with a cantilevered spring, which cantilevered spring in the closed position of the cover door abuts against a first end of the opening to secure the cover door in the closed position. In the open position, the cantilevered spring abuts against an inner face of the cover and, hence, keeps the cover door in the open position by biasing the same against an inner surface of the cover. In the opened position of the cover door access to a section comprising configurable components is acccessible from the outside of the cover, which circumferentially encloses this section.
To solve the aforementioned problem, the present invention provides an enclosure having the features defined in claim 1. Further preferred embodiments are defined in the dependent claims.
The present invention is directed to an improved enclosure and aims to provide an enclosure, which facilitates handling and organizing of incoming and/or outgoing cable and connecting the same to electric, electronic components, or cables within the enclosure. Furthermore, the present invention aims to suggest an enclosure having a compact structure. The enclosure of the present invention is to comply with practical requirements and should avoid deterioration of components received within the enclosure by dirt, scrap, rain, or tools falling down during operations within the enclosure.
An enclosure comprising a frame, defining an organizing section, comprising at least one receptacle for a cable is provided. This cable can be a copper cable. It can likewise be a fibre optical cable. The receptacle can be adapted to directly cooperate with the cable, i.e. the jacket of the cable. It can likewise be adapted to cooperate with a cable connection means connecting one end of an outgoing cable to another cable inside the enclosure and/or an electric or electronic component. The inventive enclosure furthermore comprises a cover. This cover is mountable on the frame, such that the cover can at least temporarily be fixed to the frame. The frame of the inventive enclosure has at least one opening providing access to the organizing section in the mounted state of the cover. The mounted state is the condition, in which the cover is mounted, such that the position of the cover is permanently fixed and the enclosure is closed by the cover held in the mounted position also called closed position. The cover has at least one cover door assigned to the opening and hinged to the cover. Thus, the cover door is swivel-mounted around a hinge provided between the cover door and the cover to either open or close the opening by the cover door, such that the cover door completes the cover to fully encapsulate the inner space surrounded by the cover and provided within the enclosure. However, as the tray element will protrude the opening in the second position, the opening can not be closed by the cover door if the tray element is in the second position. Preferably, the tray element is designed and arranged such, that the cover door can only be closed if the tray element is in the first position, i.e. arranged preferably essentially parallel to the outer wall of the cover.

Furthermore, the inventive enclosure comprises a tray element movably arranged and e.g. secured to the cover or to the frame to adopt a first position. In this first position, the tray element is arranged between the opening and the organizing section. Further, the tray element is realized, such that in can adapt a second position, in which the tray element is arranged below the organizing section and protrudes the cover through the opening.

The arrangement of the tray element relative to the organizing section in the second position is such that tools used for any operation on the cable, In particular tools used for connecting the free end of the cable falling down in the course of such operation will hit a tray surface and, thus, be led to the outside of the cover through the opening and guided by the tray surface, which protrudes the housing. Further, any scrap or waste resulting from the above operation will likewise fall on the tray surface and be guided to the outside of the cover. Thus, the tray element will in particular be useful in the course of operations on cable containing copper, in particular, if the enclosure has a mounting section provided below the organizing section and containing electric or electronic component(s). The tray prevents small copper wires or pieces from falling down from the organizing section into the mounting section.

Respective waste is prevented from collecting on the tray, if the tray is inclined in the second position, such that a free end of the tray surface is arranged at a position lower than an inner end of the tray, which inner end of the tray is arranged within the cover. In this preferred embodiment, the tray surface is inclined downwardly, such that any tool or scrap falling on the tray surface will slide downwards from the inner of the cover through the opening of the housing to the outside thereof and will slide off the tray surface.

The inner end of the tray surface is - in the second position - arranged underneath the organizing section. In other words, the definition contained in claim 1 that the tray element is arranged lower than the organizing section refers to the vertical position of the tray element relative to the organizing section, wherein the formulation contained in claim 3 according to which the tray surface is arranged underneath the organizing section refers to the arrangement of the tray surface in horizontal direction. Thus, in the second position, the tray surface will be arranged lower than any receptacle for a cable comprised within the organizing section, such that scrap resulting from operations on any cable will always fall onto the tray surface. Most preferably, the inner end of the tray surface is - in the second position - arranged inwardly of a receptacle plane extending essentially in vertical direction and containing multiple cable receptacles. This means that the inner end of the tray surface is arranged behind the receptacle plane in the second position.

Usually, the tray is hinged to the cover, such that the hinge is projected on both sides by surface portions of the tray. In the first position, those surface portions preferably extend parallel to the Inner surface of the cover. When the tray is swivelled around the hinge, an inner portion defining the inner end will be moved inwardly and underneath the organizing section, while the free end will be moved through the opening to protrude the outer surface of the cover.

In yet a further preferred embodiment of the present invention, the tray element is arranged essentially parallel to the outer wall of the cover in the first position. Accordingly vertical airflow suitable to cool devices within the enclosure is not obstructed. Further, In case cable receptacles are provided in the organizing section the tray element will shield the cable receptacles and cables provided therein from being accessed through the opening in respective first position. This constitution will prevent operations on the cable within the organizing section in the first position of the tray element. Thus, in any operations on the cables in the organizing section, the tray element will be brought into the second position prior to any operations.

According to a further development, the enclosure comprising a frame defining a mounting section and a cover slidably mounted on said frame and adopted to be secured against said frame in a closed position, in which said mounting section Is covered by said cover, and to be held in an elevated position, in which said mounting section is exposed.

According to this preferred embodiment, the frame defines a mounting section. This mounting section is usually adapted to receive and hold an electronic or electric component. A respective component is usually attached to said frame. Furthermore, there is provided a cover, which cover is slidably mounted on the frame and adapted to be secured against the frame in a closed position. In the closed position, the mounting section is covered by the cover. Furthermore, in the closed position the cover usually encloses the space surrounded by the cover, which cover is usually fixed against a base in the closed position and prevents unauthorized access to the items received within the cover. In this respect, It should be noted that the enclosure of the present invention is usually installed in public space. Accordingly, the cover has to serve various functions: it has to secure the items within the frame from manipulation by unauthorized persons. Further, the cover is to protect the items within the cover from environmental effects like rain and excessive sunshine, which could lead to heating of the electric or electronic components and/or deterioration of material used for making the items. Accordingly, in the closed position the cover is usually secured against the frame by a cover lock comprising a unique cover lock key.

The cover Is likewise slidably mounted on the frame, such that it can adapt an elevated position, in which the mounting section is exposed. The afore-discussed features of the enclosure according to a second aspect of the present Invention can likewise be realized in combination with the organizing section according to the first aspect of the invention discussed above.

The mounting section will be provided in a lower part of the enclosure, while the organizing section - if realized - is usually provided at an elevated section and above the mounting section. Usually, the mounting section and the organizing section are provided above each other and are defined by the frame. The cover is slidable to only expose the mounting section, Stop means are preferably provided to limit the vertical movement of the cover between the closed position and the elevated position. In the course of such sliding movement, the organizing section will preferably not be exposed on a regular basis.

While the cover is generally provided such that it can likewise be completely removed from the frame, lock means are usually provided for securing the limited movement of the cover between the closed position and the elevated position. Such lock means securing the elevated position are secured by a unique key, which can be a tool, such that personnel being authorized to conduct operations in the mounting section will not be allowed to access the organizing section, in the event such organizing section is realized. In such an event, the organizing section will likewise be locked by an organizing cover lock being assigned to the cover door to secure the same in a closed position. This organizing cover lock will likewise be provided with a unique door key, which is different from the mounting cover lock. Thus, the holder of an organizing cover lock key will not be able to unlock the mounting cover lock and vice versa. The further lock means preventing complete removal of the cover from the frame and being effective in the elevated position of the cover will usually be different from the organizing cover lock key and the mounting cover lock key and will preferably not match with the organizing cover lock key and the mounting cover lock key, respectively.

For guiding the sliding movement of the frame between the closed position and the elevated position, the frame usually comprises guide rails, which guide rails are provided by profiles usually extending in vertical direction of the enclosure after installing the same. Those guide rails are usually provided on opposing end faces of the frame. In other words, the organizing section and the mounting section are usually received between respective profiles defining the outer guide rails.

According to this preferred embodiment of the invention, the cover is preferably held in the elevated position by a biasing means, which can be compressed when closing the frame, i.e. bringing the same into the closed position. This biasing means is preferably realized by at least one gas spring adapted to effect a holding force, such that the cover is held in the elevated position. Thus, in the elevated position the force generated by the gas spring is at least equivalent to the weight of the cover. Practical experiments have led to the conclusion that a spring force is in particular suitable to facilitate sliding movement of the cover. In particular, the gas spring will exert only a reduced resistance against a manual force pushing the cover from the elevated position into the mounted position.

According to a preferred embodiment, the gas spring extends in the direction of the sliding movement of the cover from the closed to the elevated position and vice versa and, hence, in a direction parallel to the longitudinal extension of the guide rails. The gas spring is loosely attached to on of said cover or said frame and permanently fixed to the other of said cover or said frame. Preferably, the gas spring is permanently attached to the cover, such that it extends in vertical direction by virtually hanging down from a fixation with the cover. The frame usually provides a funnel-like receptacle for the other end of the gas spring. In the elevated position and the closed position, this other end of the gas spring is received within the funnel-like receptacle. When mounting the cover onto the frame by introducing guide members secured to the cover into the guide rails no specific mounting of the gas spring on the frame is required. Instead, the funnel-like receptacle is adapted to receive the other end of the gas spring as a consequence of the mounting operation. The guide rails may likewise have a funnel-like opening adapted to receive the guide members for the sliding movements.

On a regular basis, in the elevated position the guide member Is received within the guide rail close to the open end thereof. The guide member received within the guide rail usually cooperates with the lock means adapted to secure the elevated position and prevent the cover from unintentional removal from the frame. The guide rail furthermore has an open end, such that after unlocking of the lock means, the cover can be removed from the frame by simply lifting the cover.

Preferably, a lock element is provided, which secures the cover in the closed position, preferably by means of a positive fit. In case of adequate fixing of the cover in the locked position, the lock element will hold the biasing force of the biasing element. In case of insufficient locking, the biasing means will lift the cover towards the elevated position. The elastic force of the biasing means does not necessarily need to provide a movement of said cover to finally reach the elevated position. Any displaced position of the cover different from the locked position will indicate to the user that the cover has not been adequately secured in the locked position.

According to this further preferred embodiment, at least an upper part of the frame is modular. Such modular constitution is preferably realized by extrusion profiles connected to each other for defining the frame. Accordingly, after insulation of the enclosure and after mounting and/or organizing operations, in which course it turns out that the enclosure does not provide sufficient space, the frame can easily be enlarged by replacing existing extrusion profile by longer extrusion profiles or simply add additional extrusion profiles. The cover may likewise have a modular constitution and may be enlarged by a skirt portion being attached to the open end of the cover to comply with the enlarged frame. This skirt portion may be attached to the existing cover gluing or welding the material of the cover and the skirt portion.

This material is preferably a polymer. Alternatively, the existing cover may be replaced by a larger new cover.

It is provided according to a further preferred embodiment an enclosure comprising a base adapted to be mounted below the ground level and defining at least one cable inlet passageway and a frame defining a mounting section and/or an organizing section adopted to be arranged above the ground level and a cover mounted on said frame, wherein said cable inlet passageway terminates in at least one Inlet opening defined by said base above the ground level.

According to this preferred embodiment, which may likewise constitute an Independent further aspect of the present invention, the enclosure comprises a base adapted to be mounted below ground level. For this, the base preferably has a foot, which can be arranged and preferably fixed to a concrete stand and can be surrounded by gravel, earth, or the like. The enclosure is regularly installed such that the ground level is projected by a rim extending in vertical direction and holding sealing means. This rim is adapted to be introduced into the open end of the cover to thereby provide a sealing closure between the base and the cover. In this constitution, the enclosure preferably comprises at least one electronic and/or an electric component. The base, in particular those parts of the base, which are arranged below ground level, provide a receptacle for the at least one electronic and/or electric component. In other words, components are contained in the enclosure are not surrounded by the cover, but are surrounded by the base and arranged below ground level. Accordingly, the volume of the enclosure above ground level can be diminished without altering volume provided by the enclosure for storing Items within the enclosure. Additionally, the specific aspect of the present invention provides the opportunity to protect heat sensitive components like the electronic components from sun load and to use the cooling effect of ground temperature, e.g. to dissipate heat generated by respective components in the course of operation of the components within the enclosure.

In addition to the receiving means for receiving the at least one electronic or electric component below the ground level in the base, or as an alternative to respective receiving means, the base defines a cable inlet passageway, which passageway terminates in at least one inlet opening defined by said base. To prevent cable sealing and the risk of water penetration Into the enclosure, such Inlet opening is defined by the base above the ground level. For realizing this third aspect of the present invention, the base preferably defines a dome. This dome is to be understood as a channel in vertical direction extending Into the base, being open to the underside or a lower portion of a lateral side of the base and providing a chimney-like space adapted to introduce one or more incoming and/or outgoing cables into the enclosure without penetrating the inlet opening. Thus, the dome defines the cable Inlet passageway sealed from a compartment surrounded by the base for receiving the at least one electronic component. Respective inlet opening is arranged above ground level, such that rising water within the ground will not be able to enter the enclosure through the cable inlet opening.

For facilitating connection of incoming cable with components provided In the mounting section, all inlet openings are preferably defined by said dome.

The base could comprise an extension section adapted to receive one or more electronic components, which extension section extends in vertical direction and Is projected by and arranged above solid stand. Said solid stand is usually made of concrete to facilitate upright installation of the enclosure in ground.

In a preferred embodiment a rod is attached to the base, which rod extends in horizontal direction. The rod is positioned next to the cable inlet passageway such that cable being introduced into the enclosure through the cable Inlet passageway are drawn into the cable Inlet passageway under uncritical mechanical conditions. The rod usually has a round shape and is arranged relative to the cable Inlet passageway such that the cable exhibits uncritical bending when being introduced into and drawn through the cable inlet passageway into the enclosure. The rod will likewise prevent axial forces on the cable to translate into flexure or torsion of the cable sealing device.

According to a further preferred embodiment, the base receives a chimney element, which chimney element defines a venting channel for air to rise from a lower portion of the base. The air Is usually heated by a heat dissipating element received within the base. The opening of the chimney is usually arranged such that the heated air will impinge the inner surface of the cover to thereby achieve maximum heat transfer to the outside of the enclosure. Accordingly, the outlet opening defined by the chimney element Is regularly arranged close to the inner surface defined by the cover.

According to a further preferred embodiment, the chimney element has a U-shaped cross-section adapted to receive a housing of a component comprising the at least one heat dissipating element. The U-shaped cross-section is selected such that the chimney element encompasses opposing side walls of the housing with minimum play thereby leaving a venting channel at the front surface of the housing. The surface defined by the chimney element opposed to said front surface is usually slightly inclined outwardly such that heated air can vent from a middle portion of the base towards a peripheral portion of the base thereby being impinged against the inner surface of the cover when raising in the enclosure.

Further details and advantages of the present invention are learnable from the following description of a preferred embodiment in combination with the drawings. In the drawings:
- Figure 1: is perspective side view of the embodiment;
- Figure 2: is a side view essentially in accordance with Figure 1 in an elevated position of the cover;
- Figure 3: is an enlarged detail III shown in Figure 2;
- Figure 4: is a perspective back view of the lower part of the embodiment of Figures 1 through 4;
- Figure 5: is a perspective view in accordance with Figures 1 and 2 showing the structural elements of the embodiment;
- Figure 6: is a perspective side view of a base of the embodiment;
- Figure 7: is a perspective side view of an upper part of the enclosure with a cover door being open;
- Figures 8 and 9: are perspective side views of the base of the embodiment;
- Figures 10 and 11: are perspective side views of the base of the embodiment with components received therein..

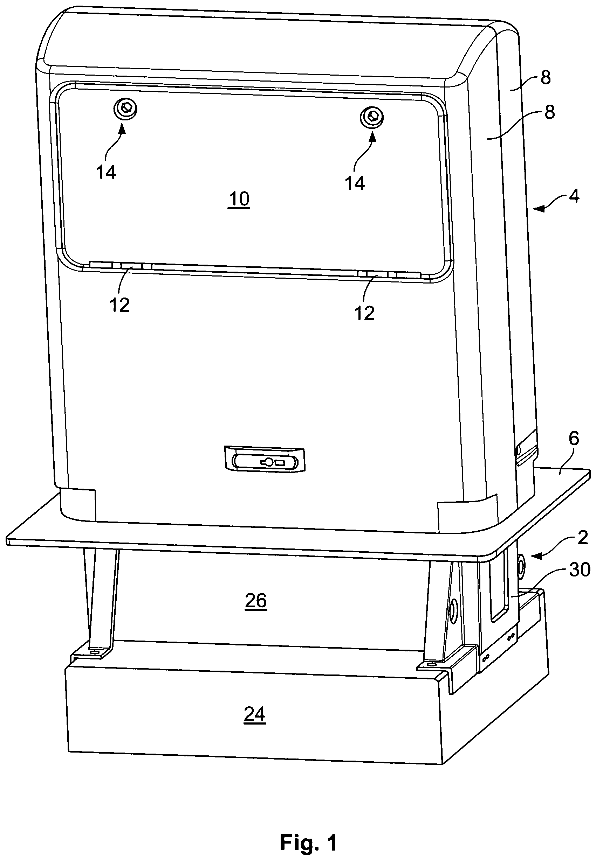

Figure 1 shows a perspective view of the embodiment of an enclosure comprising a base 2 and a cover 4 being lowered down to a ground level indicated with reference number 6.

The cover 4 is composed of two half shells 8, which are connected with each other. In figure 1, the front side of the cover 4 is shown, which cover 4 comprises a cover door 10 hinged to the cover 4 and, thus, being permanently connected to the cover 4 by hinges 12. Those hinges have a swivelling axis extending in horizontal direction. The opposed end side of the cover door 10 is provided with an organizing cover lock 14 cooperating with holding means (not shown) provided by the cover 4. The organizing cover lock 14 may be operable by a unique organizing cover lock key, which matches the cover lock 14. Instead a single key may match with organizing cover locks of plural enclosures of a single operator.

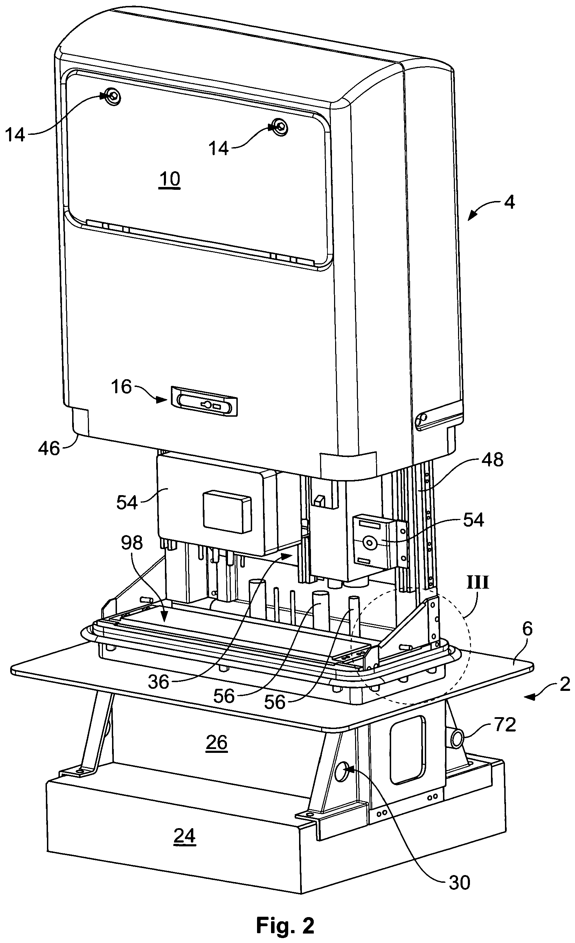

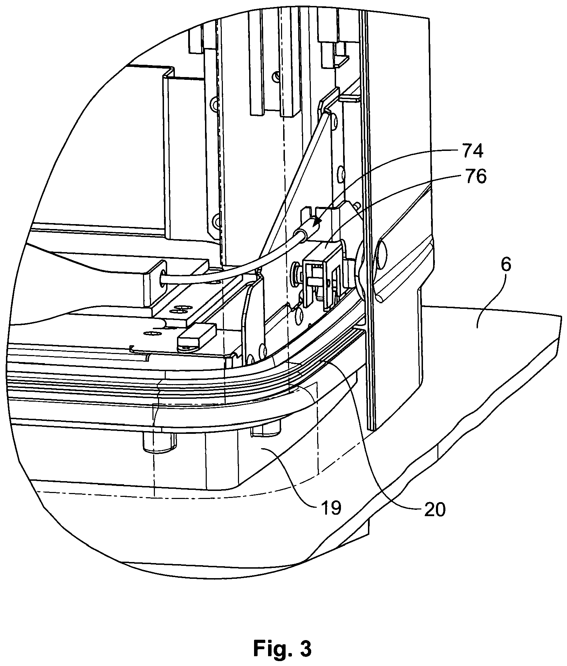

The cover 4 is provided with a cover lock 16 adapted to cooperate with a frame 18 (compare figures 2, 3) to hold the cover 4 in the closed position as shown in figure 1. In this closed position, the lower end of cover 4 rests on or is at least arranged close to the ground level 6 and cooperates by a rim 19 arranged above ground level 6 and holding a circumferential sealing 20 for sealing a compartment 22 encapsulated by said cover 4. The base 2 can be mounted on an enlarged stand 24 made of concrete and an extension 26 defining a hollow compartment 28 to receive components, which are comprised by the enclosure and not contained in the compartment 22. The enlarged stand 24 is attached to the extension 26 by brackets 30 encompassing both, the enlarged stand 24 and the extension 26 and terminating essentially at ground level 6. The brackets 30 are fixatedly attached to the enlarged stand 24 by screws while the extension 26 is held within U-shaped receptacles formed by both brackets 30. Accordingly, the extension 26 can be slid in a space formed between the opposing brackets 30 to be positively held by those brackets 30.

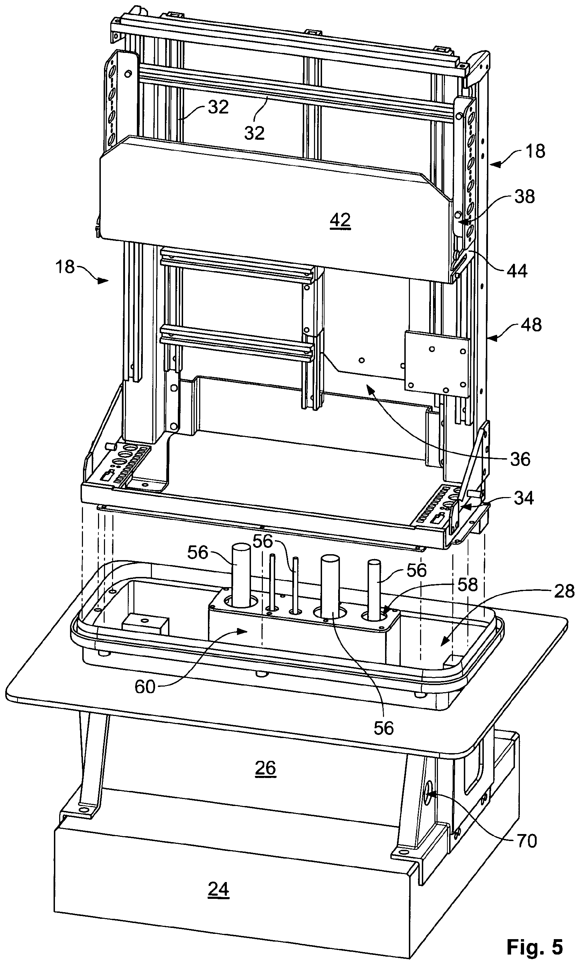

As is particular evident from figure 5, the frame 18 comprises plural profiles 32, which may be extruded profiles and which are connected to each other by screws. Those profiles 32 define the supporting structure of the frame 18. The frame 18 furthermore comprises a base portion 34, which extends in horizontal direction, i.e. perpendicular to the profiles 32 and can be secured to the base 2 by screws.

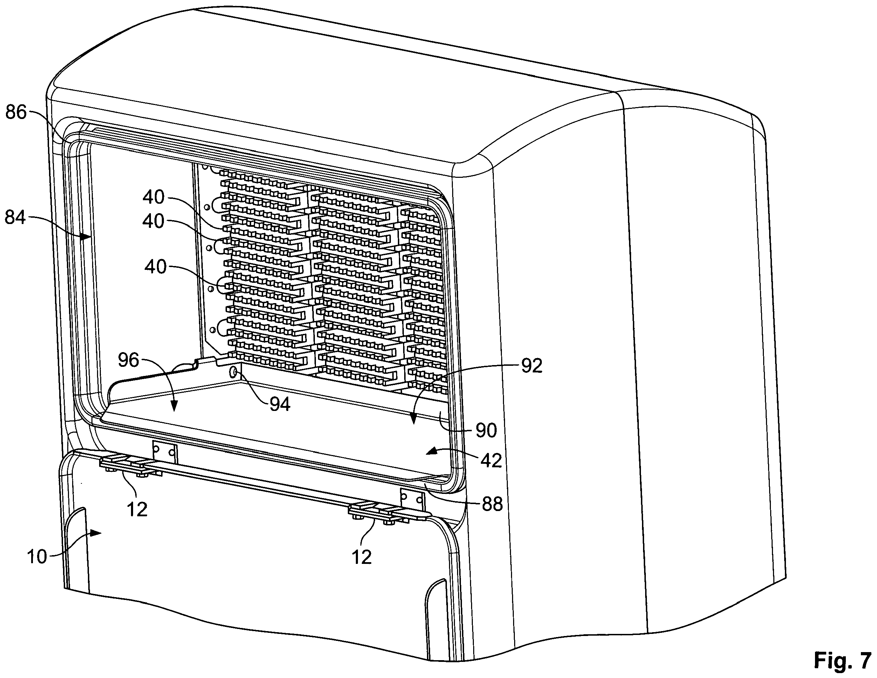

The frame 18 defines a mounting section 36 immediately above the base portion 34 and an organizing section 38 above said mounting section 34. The organizing section 38 comprises plural rows of cable connectors, which are adapted to receive the free ends of cables to connect the same with each other. The organizing section 38 may be used to crossconnect copper twisted pairs and/or optical fibres. The cable connectors are identified with reference numeral 40 in figure 7. In figure 5, respective cable connectors are not shown. However, figure 5 shows a tray element 42 hinged to the frame 18 via a cantilever arm 44 projecting lateral profiles 32 of the frame 18. The tray element 42 can be positioned in an extension in parallel with the vertical extension, i.e. essentially parallel to a plane containing the profiles 32. In this orientation, the tray element 42 essentially shields the cable connectors 40 and is arranged between the cover door 10 and the organizing section 38 and does not obstruct vertical airflow within the enclosure.

Figures 2 to 4 show the embodiment in an elevated position of the cover 4. In said elevated position, the mounting section 36 is exposed between ground level 6 and an open end 46 of the cover 4. In the course of the movement from the closed position to the elevated position, guide members attached to the cover 4 cooperate with guide rails 48 being attached to outer profiles 32 of the frame 18, cooperate with each other and guide the sliding movement of the cover 4 relative to the frame 18. On the backside of the organizing section 38 and in the middle between the guide rails 48, there is provided a gas spring 50 attached on one end to the cover and being supported at its other end by the frame 18. This support provides an abutment for the other end of the gas spring 50 without securing the same to the frame 18. For this, a funnel-like receptacle 52 is attached to the frame 18, which receptacle 52 will guide the free end of the gas spring 50 in the course of mounting the cover 4 on the frame 18.

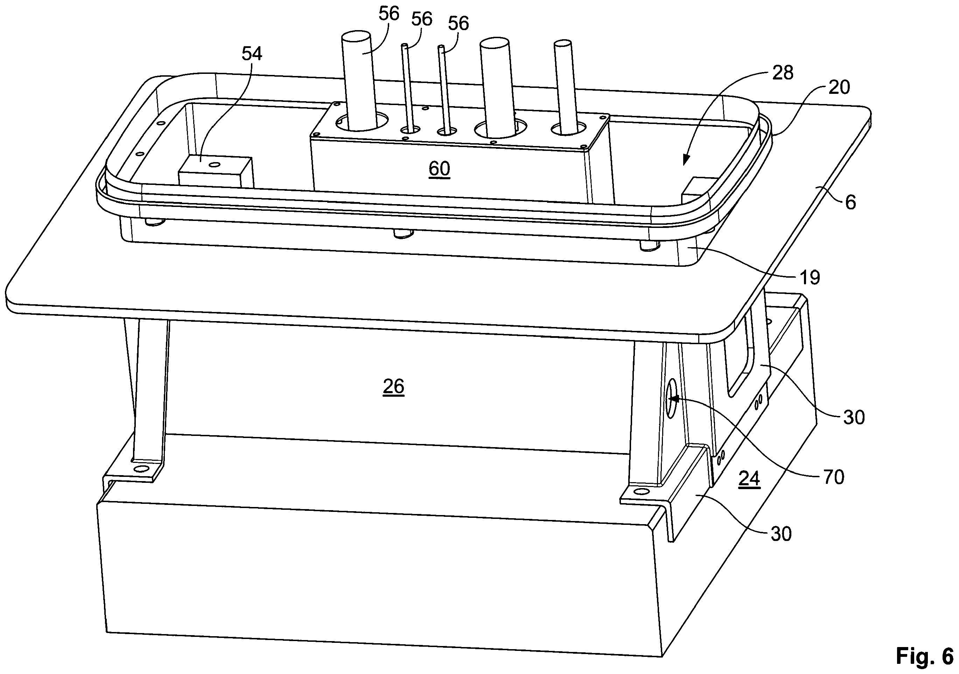

Above the ring-shaped base portion 34 and within the mounting section 36, there are provided plural electronic and/or optical components identified with reference numeral 54. Those electronic components are accessible in the elevated position of the cover 4. Further, cables 56 can be assessed which projects the base 2 to forward the frame 18 (compare figures 5, 6). Those cables 56 are guided through the base 2.

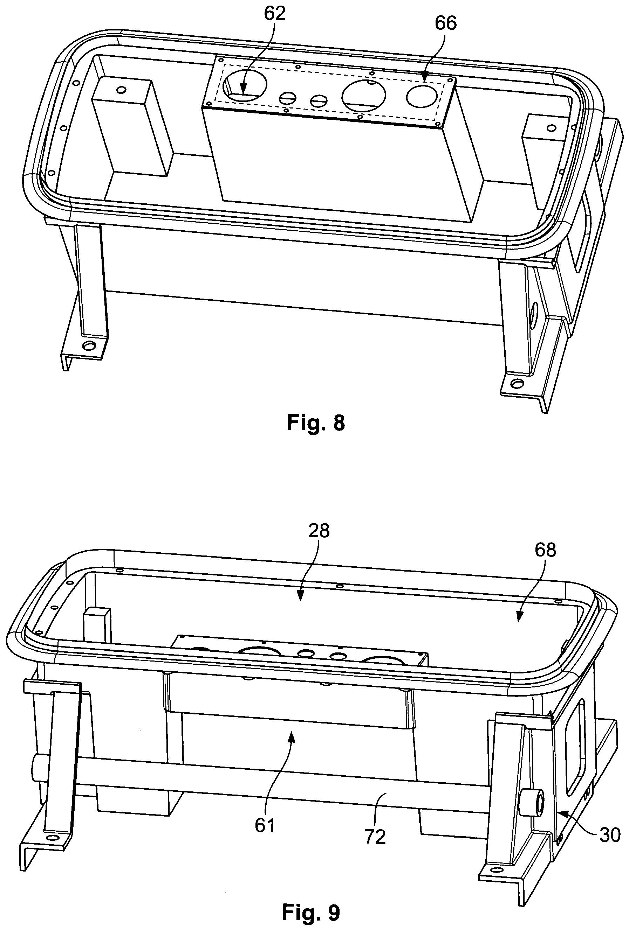

As visualized in Figures 8 and 9, the foot section 24 has a rearward cable Inlet opening 58, which cable inlet opening 58 is provided on a sidewall with distance below ground level 6 and provides access to a dome 60 extending in vertical direction and defining a chimney-like space 62 extending in vertical direction for introducing plural cables through the base in vertical direction. This chimney-like space 62 is covered by a cover plate 64 (see figure 5) having multiple bores, each bore adapted to guide and hold a cable 56 of appropriate diameter in the cover plate 64. The cover plate 64 Is sealed and screwed against a rim 66 of the base 2. The inner space 28 defining a receptacle 68 for at least one electronic or optical component is sealingly separated from the chimney-like space 62 by the dome 60.

Below the cable Inlet opening 58, the brackets 30 are provided with bores 70, through which a rod 72 extends. This rod 72 is thereby secured to the brackets 30 and defines guiding means for cables 56 being introduced through the cable inlet opening 58 to prevent the same from contacting a rather sharp edge at the cable inlet opening 58 and to secure a rather large radius of bending of the cables being introduced the chimney-like space 62. The rod 72 will also reduce the effect that axial forces on the cable are transferred to torsional or flexural forces on the cable sealing.

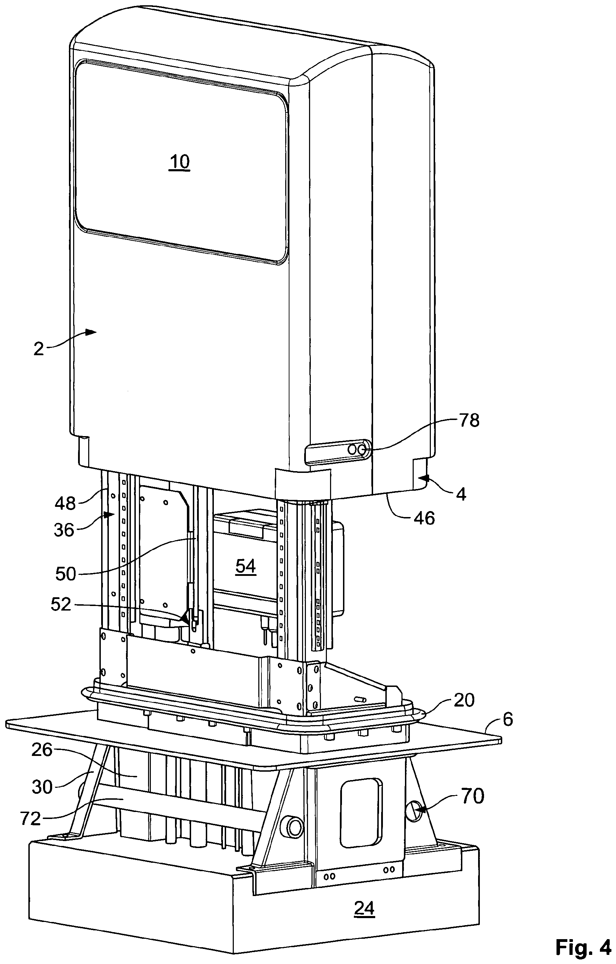

For securing the cover 4 in the closed position, the cover lock 16 cooperates with a flexible axis identified in figure 3 with reference numeral 74. This flexible axis 74 is guided along the inner circumference of the cover 4 and is adapted to cooperate with a swivable locking element 76 adapted to cooperate with a positive locking pin 78 provided on the inner circumference of the cover 4 (Fig. 4). By activating the cover lock 16, respective swivable locking elements 76 may pivot about an axis to either cooperate with the locking pin 78 or release the same such that the cover 4 can be moved relative to the frame 16. In case the swivable locking element 76 does not properly cooperate with the locking pin 78 attached to the cover 4, the same will be urged upwardly by the biasing force of the gas spring 50. In other words, if the cover 4 is not appropriately closed, lifting of the cover 4 will indicate the operator in adequate locking. In the closed position, opening of the cover door 10 will provide access to the tray element 42. The same can be swivelled to project through an opening 84 recessed in the cover 4 provided with a sealing ring 86 circumferentially enclosing the opening 84 and cooperating with the cover door 10 in the closed position as shown in figure 1. The open position of the cover door 10 is shown in figure 7. In this figure, the tray element 42 projects the opening 84, such that a free end 88 of the tray element 42 terminates outside of the cover 4. In the second position of the tray element 42 shown in figure 7, the other, inner end 90 is arranged underneath the organizing section 38, i.e. below all cable connectors 40. Furthermore, the inner end 90 of the tray element 42 is arranged behind a plane containing all cable connectors 40. The inner end 90 is provided by an inner portion 92 of the tray element 42, which inner portion 92 projects a hinge 94 of the tray element 42 in one direction, while an outer portion 96 projects the hinge in the other direction. In other words, the tray element 42 has a two arm constitution with respect to the hinge 95 with the outer portion 96 of the tray element 42 projecting the hinge 95 towards the opening 84 and preferably therethrough while the inner portion 92 projects the hinge 95 in opposed direction at least in the second position of the tray element 42. Thus, when swivelling the tray element 42 into the second position, the inner end 90 will be arranged underneath the organizing section 38 and below all cable connectors 40. Thus, during operation in the organizing section 38, In particular when connecting copper cable to each other, scrap or tools falling down from the organizing section 38 will not fall into the lower part of the compartment 22. The electronic components 54 provided in this lower part of the compartment 22 are, thus protected by the tray element 42. In fact, in the second position, the tray element 42 is slidely inclined downwardly, such that the free end 88 of the tray element 42 is arranged lower than the inner end 90 to provide a downwardly inclined slide for tools and scrap falling on the tray surface to be positively led away from the enclosure and fall on the ground.

Further, the tray element 42 is designed and arranged such, that the door 10 can not be closed unless the tray element 42 is arranged in the first position, i.e. with vertical orientation. Thus, vertical ventilation within the enclosure will not be obstructed by the tray element 42 when the door is closed.

The shown embodiment has a lock, which locks the cover 4 in the elevated position. This lock, however, can be released in order to fully remove the cover 4. However, in the elevated position all electronic components are protected by the cover 4, which shields the electronic components 54 like an umbrella. Thus, during operation on the electronic components 54 or the cable 56, the lower part of the compartment 22 is protected from environment.

Due to the different locks, i.e. the lock 16 for the cover 4 on one hand and the lock 14 for the cover door 10 on the other, unauthorized access to the mounting section 36 and the organizing section 38, respectively, can be avoided. A service man of a provider is usually given access to the organizing section 38, while no access is permitted to the mounting section 36. While the operator may be given access to the mounting section 36, but not access is permitted to the organizing section 38.

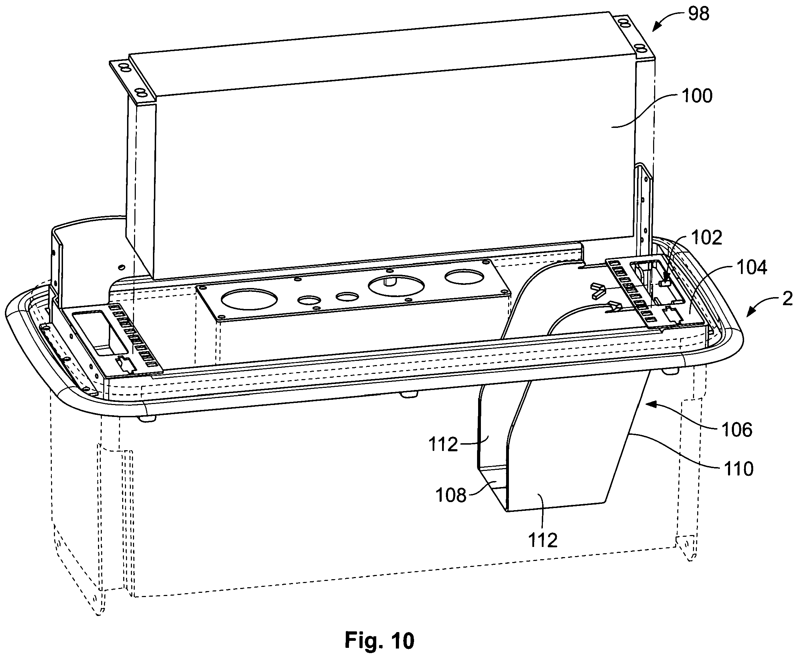

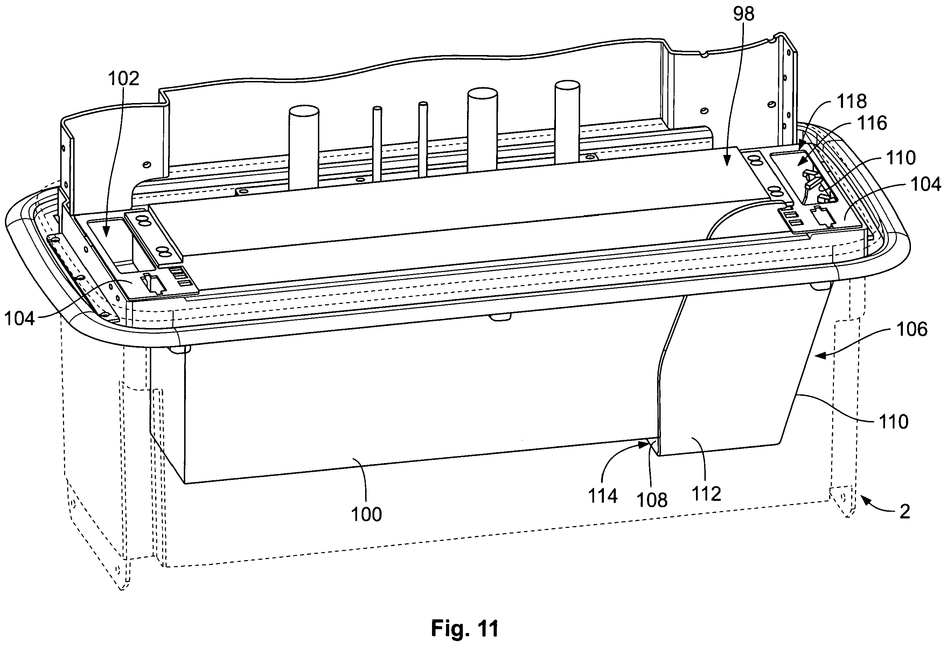

Figures 10 and 11 elucidate specific means for maximum cooling of a heat dissipating element received within the base 2. This heat dissipating element Is a DSLAM-component 98 having a housing 100, which DSLAM-component 98 being lowered into the base 2 such that the upper side of the DSLAM-component is essentially level with the upper end of the base 2. Between the end faces of the housing 100 and the inner end faces of the base 2 there are each provided venting holes 102 communicating with a lower portion of the base 2. Those venting holes 102 are recessed in a fixation member 104 for the DSLAM-component 98 made of sheet metal. On one end side of the base 2 there is provided a chimney element 106 made of sheet metal bend to an essentially U-shaped cross-section. The chimney element 106 has a chimney element base 108 and a chimney element end face 110 arranged between two lateral side faces. Between those chimney element side faces 112 the housing 100 is fitted with almost not play. Between a lower end side of the housing 100 and the chimney element base 108 there is defined an inlet opening 114 while the venting hole 102 defines an outlet opening 116 of a venting channel 118. Due to the inclined orientation of the chimney element end face 110, the venting channel 118 is with its vertically extending section directed towards the Inner surface provided by the cover 4. Thus, air heated by heat dissipating elements contained within the housing 100 will be impinged against the inner surface of the cover thereby providing optimum heat transfer to cool respective air. This cooled air will eventually circulate and enter the base 2 through the venting hole 102 adjacent to the outlet opening 116.

### Reference list

- 2: base
- 4: cover
- 6: ground level
- 8: half shell
- 10: cover door
- 12: cover hinge
- 14: organizing cover lock
- 16: cover lock
- 18: frame
- 19: rim
- 20: sealing
- 22: compartment
- 24: stand
- 26: extension
- 28: space
- 30: bracket
- 32: profile
- 34: base portion
- 36: mounting section
- 38: organizing section
- 40: cable connector
- 42: tray element
- 44: cantilever arm
- 46: open end
- 48: guide rails
- 50: gas spring
- 52: funnel-like receptacle
- 54: electronic component
- 56: cable
- 58: cable inlet opening
- 60: dome
- 61: inlet passageway
- 62: chimney-like space
- 64: cover plate
- 66: upper rim
- 68: receptacle
- 70: bore
- 72: rod
- 74: flexible rod
- 76: swivable locking element
- 78: positive locking pin
- 80: positive locking pin
- 84: opening
- 86: sealing ring
- 88: free end
- 90: inner end
- 92: inner portion
- 94: hinge
- 96: outer portion
- 98: DSLAM-component
- 100: housing
- 102: venting hole
- 104: fixation member
- 106: chimney element
- 108: chimney element base
- 110: chimney element end face
- 112: chimney element side face
- 114: Inlet opening
- 116: outlet opening
- 118: venting channel

## Claims

1. Enclosure comprising a frame (18) defining an organizing section (38) and a cover (4) mountable on said frame (18),
wherein said cover (4) has at least one opening (84) providing access to said organizing section (38) in the mounted state of said cover (4) and at least one cover door (10) assigned to said opening (84) and attached to said cover (4) and further comprising a tray element (42) for shielding the organizing section (38), which tray element (42) is movably arranged to adopt
- a first position, in which the tray element (42) is arranged between the opening (84) and the organizing section (38), and
- a second position, in which the tray element (42) is arranged at a lower level than the organizing section (38) and in which the tray element (42) protrudes the cover (4) through the opening (84).

2. Enclosure according to claim 1, **characterized in that** in said second position a tray surface of said tray element (42) is inclined, such that a free end (88) of said tray surface is arranged at a position lower than an inner end (90) of said tray surface arranged within the cover (4).

3. Enclosure according to claim 1 or 2, **characterized in that** in said second position the inner end (90) of said tray surface is arranged underneath the organizing section (38).

4. Enclosure according to one of the preceding claims, **characterized in that** in said second position the inner end (90) is arranged inwardly of a receptacle plane extending essentially in vertical direction and containing multiple cable receptacles (40).

5. Enclosure according to one of the preceding claims, **characterized in that** in said first position said tray element (42) is arranged essentially parallel to the outer wall of the cover (4).

6. Enclosure according to one of the preceding claims, **characterized in that** the frame (18) is defining a mounting section (36) and the cover (4) is circumferentially enclosing the mounting section (36), which cover (4) is slidably mounted on said frame (18) and adopted to be secured against said frame (18) in a closed position, in which said

7. Enclosure according to claim 6, **characterized by** at least one biasing means (50) adopted to effect a holding force such that the cover (4) is held in the elevated position.

8. Enclosure according to claim 7, **characterized in that** said biasing means (50) extends in the direction of the sliding movement of said cover (4) from the closed to the elevated position and that one end of said biasing means (50) is loosely attached to one of said cover (4) or said frame (18).

9. Enclosure according to any of the claims 6 to 8, **characterized by** guide means for guiding the sliding movement comprising at least one guide rail (48) attached to one of the cover (4) or the frame (18) and a guide member slidable within said guide rail (48) and attached to other of the cover (4) or the frame (18), wherein said guide rail (48) has an open end and wherein in the elevated position the guide member is received within the guide rail (48) close to the open end thereof.

10. Enclosure according to any of the claims 6 to 9, **characterized in that** said biasing means (50) are adapted to lift said cover (4) towards the elevated position in case the cover (4) is not secured in the closed position.

11. Enclosure according to one of the preceding claims, **characterized in that** the enclosure is further comprising a base (2) adopted to be mounted below the ground level and is defining at least one cable inlet passageway (61) and the frame (18) is defining the mounting section (36) and/or the organizing section (38) adapted to be arranged above the ground level and the cover (4) mounted on said frame, wherein said cable inlet passageway (61) terminates in at least one inlet opening (58) defined by said base (2) above the ground level.

12. Enclosure according to claim 11, **characterized in that** said base defines a dome (60), which defines the at least one inlet opening (58).

13. Enclosure according to claim 11 or 12, **characterized by** a rod (72) attached to said base (2) in a horizontal extension.

14. Enclosure according to any of the claims 11 to 13, **characterized by** a chimney element (106) provided in the base (2) and defining a venting channel (118) for air heated by a heat dissipating element received within the base (2) to rise from the lower portion of said base (2).

15. Enclosure according to claim 14, **characterized in that** said chimney element (106) has a U-shaped cross-section adapted to receive a housing (100) containing a component comprising the at least heat dissipating element (98).

## Patentansprüche

1. Gehäuse mit einem Rahmen (18), der einen Organisationsabschnitt (38) definiert und eine auf dem Rahmen (18) montierbare Abdeckung (4),
wobei die Abdeckung (4) mindestens eine Öffnung (84) aufweist, die im montierten Zustand der Abdeckung (4) einen Zugang zu dem Organisationsabschnitt (38) ermöglicht und mindestens eine der Öffnung (84) zugeordnete Abdeckungstür (10), welche der an der Abdeckung (4) befestigt ist,
und des weiten enthaltend ein Schalenelement (42) zum Abschirmung des Organisationsabschnitts (38), wobei das Schalenelement (42) beweglich angeordnet ist um
- eine erste Position anzunehmen, in der das Schalenelement (42) zwischen der Öffnung (84) und dem Organisationsabschnitt (38) angeordnet ist, und
- eine zweite Position anzunehmen, in der das Schalenelement (42) auf einer niedrigeren Ebene als der Organisationsabschnitt (38) angeordnet ist und in dem das Schalenelement (42) die die Abdeckung (4) durch die Öffnung (84) überragt.

2. Gehäuse nach Anspruch 1, **dadurch gekennzeichnet, dass** in der zweiten Position eine Schalenoberfläche des Schalenelements (42) geneigt ist, so dass ein freies Ende (88) der Schalenoberfläche an einer Stelle angeordnet ist, die niedriger ist, als ein inneres Ende (90) der Schalenoberfläche, welches in der Abdeckung (4) angeordneten ist.

3. Gehäuse nach Anspruch 1 oder 2, **dadurch gekennzeichnet, dass** in der zweiten Position das innere Ende (90) der Schalenoberfläche unterhalb des Organisationsabschnitts (38) angeordnet ist.

4. Gehäuse nach einem der vorhergehenden Ansprüche, **dadurch gekennzeichnet, dass** in der zweiten Position das innere Ende (90) der Schalenoberfläche innerhalb einer Aufnahmeebene angeordnet ist, welche im Wesentlichen in vertikaler Richtung verläuft und mehrere Kabelaufnahmen (40) enthält.

5. Gehäuse nach einem der vorhergehenden Ansprüche, **dadurch gekennzeichnet, dass** in der ersten Position das Schalenelement (42) im Wesentlichen parallel zur Außenwand der Abdeckung (4) angeordnet ist.

6. Gehäuse nach einem der vorhergehenden Ansprüche, **dadurch gekennzeichnet, dass** der Rahmen (18) einen Befestigungsabschnitt (36) definiert und die Abdeckung (4) den Befestigungsabschnitt (36) umfänglich begrenzt, wobei die Abdeckung (4) verschiebbar auf dem Rahmen (18) gelagert ist und vorgesehen ist in einer geschlossenen Position gegen den Rahmen (18) befestigt zu sein, in welcher der Befestigungsabschnitt (36) von der Abdeckung (4) abgedeckt ist, und vorgesehen ist in einer erhöhten Position gehalten zu werden, in der der Befestigungsabschnitt (36) freiliegt.

7. Gehäuse nach Anspruch 6, **dadurch gekennzeichnet, dass** mindestens eine Vorspanneinrichtung (50) vorgesehen ist, um eine Haltekraft zu bewirken, so dass die Abdeckung (4) in der erhöhten Position gehalten wird.

8. Gehäuse nach Anspruch 7, **dadurch gekennzeichnet, dass** sich die Vorspanneinrichtung (50) in Richtung der Gleitbewegung der Abdeckung (4) von der geschlossenen in die erhöhte Position erstreckt, und dass ein Ende der Vorspanneinrichtung (50) lose an einer der Abdeckungen (4) oder dem Rahmen (18) befestigt ist.

9. Gehäuse nach einem der Ansprüche 6 bis 8, **gekennzeichnet durch** Führungseinrichtungen zur Führung der Gleitbewegung mit mindestens einer an einem, der Abdeckung (4) oder dem Rahmen (18) befestigten Führungsschiene (48) und einem Führungsglied, welches innerhalb der Führungsschiene (48) verschiebbar ist und an der anderen der Abdeckung (4) oder dem Rahmen (18) befestigt ist,
wobei die Führungsschiene (48) ein offenes Ende aufweist und wobei in der erhöhten Position das Führungsglied innerhalb der Führungsschiene (48) in der Nähe des offenen Endes davon aufgenommen ist.

10. Gehäuse nach einem der Ansprüche 6 bis 9, **dadurch gekennzeichnet, dass** die Vorspanneinrichtung (50) dazu ausgelegt ist, die Abdeckung (4) in Richtung der erhöhten Position zu heben, falls die Abdeckung (4) nicht in der geschlossenen Position gesichert ist.

11. Gehäuse nach einem der vorhergehenden Ansprüche, **dadurch gekennzeichnet, dass** das Gehäuse ferner eine Basis (2) umfasst, die adaptiert ist unterhalb des Bodenniveaus angebracht zu sein und die mindestens einen Kabeleingangsdurchgang (61) definiert, und
dass der Rahmen (18) den Befestigungsabschnitt (36) und / oder der Organisationsabschnitt (38) definiert, der oberhalb des Bodenniveaus angeordnet ist, und die auf dem Rahmen angebrachten Abdeckung (4),
wobei
der Kabeleinlassdurchgang (61) in mindestens einer Einlassöffnung (58) oberhalb des Bodenniveaus endet, die durch die Basis (2) definiert ist.

12. Gehäuse nach Anspruch 11, **dadurch gekennzeichnet, dass** die Basis eine Kuppel (60) definiert, die die mindestens eine Einlassöffnung (58) definiert.

13. Gehäuse nach Anspruch 11 oder 12, **gekennzeichnet durch** eine an der Basis (2) in einer horizontalen Verlängerung befestigten Stange (72).

14. Gehäuse nach einem der Ansprüche 11 bis 13, **gekennzeichnet durch** ein in der Basis (2) vorgesehenes Schornsteinelement (106), das einen Entlüftungskanal (118) für Luft definiert, welche durch ein wärmedissipierendes Element erhitzt wurde, welches in der Basis (2) enthalten ist, um aus dem unteren Teil der Basis (2) aufzusteigen.

15. Gehäuse nach Anspruch 14, **dadurch gekennzeichnet, dass** das Schornsteinelement (106) einen U-förmigen Querschnitt aufweist, der zur Aufnahme eines Gehäuses (100) geeignet ist, das ein Bauteil mit dem zumindest einen wärmedissipierenden Element (98) enthält.

## Revendications

1. Enceinte comportant un bâti (18) définissant une section d'organisation (38) et un couvercle (4) pouvant être monté sur ledit bâti (18),
dans lequel ledit couvercle (4) présente au moins une ouverture (84) permettant d'accéder à ladite section d'organisation (38) lorsque ledit couvercle (4) est installé et au moins une porte de couvercle (10) affectée à ladite ouverture (84) et fixée audit couvercle (4) et comprenant en outre un élément plateau (42) pour protéger la section d'organisation (38), lequel élément plateau (42) est agencé de manière mobile pour adopter
- une première position, dans laquelle l'élément plateau (42) est disposé entre l'ouverture (84) et la section d'organisation (38), et
- une seconde position, dans laquelle l'élément plateau (42) est agencé à un niveau inférieur à celui de la section d'organisation (38) et dans laquelle l'élément plateau (42) dépasse du le couvercle (4) à travers l'ouverture (84).

2. Enceinte selon la revendication 1, **caractérisée en ce que** dans ladite seconde position, une surface de plateau dudit élément plateau (42) est inclinée, de sorte qu'une extrémité libre (88) dudit plateau la surface est agencée à une position inférieure à une extrémité intérieure (90) de ladite surface de plateau disposée à l'intérieur du couvercle (4).

3. Enceinte selon la revendication 1 ou la revendication 2, **caractérisée en ce que** dans ladite seconde position, l'extrémité intérieure (90) de ladite surface de plateau est agencée sous la section d'organisation (38).

4. Enceinte selon l'une quelconque des revendications précédentes, **caractérisée en ce que** ladite seconde position, l'extrémité intérieure (90) est disposée vers l'intérieur d'un plan de réception s'étendant essentiellement dans la direction verticale et contenant plusieurs réceptacles de câble (40).

5. Enceinte selon l'une quelconque des revendications précédentes, **caractérisée en ce que** dans ladite première la position, ledit élément plateau (42) est agencé essentiellement parallèlement à la paroi extérieure du couvercle (4).

6. Enceinte selon l'une quelconque des revendications précédentes, **caractérisée en ce que** le bâti (18) définit une section de montage (36) et le couvercle (4) entoure la section de montage (36) de manière circonférentielle, lequel couvercle (4) est monté coulissant sur ledit bâti (18) et prévu pour se fixer contre ledit bâti (18) en position fermée, dans laquelle ladite section de montage (36) est recouverte par ledit couvercle (4), et être maintenue dans une position élevée, dans laquelle ladite section de montage (36) est exposée.

7. Enceinte selon la revendication 6, **caractérisée par** au moins un moyen de sollicitation (50) prévu pour appliquer une force de maintien pour que le couvercle (4) soit maintenu en position élevée.

8. Enceinte selon la revendication 7, **caractérisée en ce que** ledit moyen de sollicitation (50) se prolonge dans le sens du mouvement coulissant dudit couvercle (4) de la position fermée à une position élevée et qu'une extrémité dudit moyen de sollicitation (50) est fixée, mais non à demeure, à l'un des éléments que sont ledit couvercle (4) et ledit bâti (18).

9. Enceinte selon l'une quelconque des revendications 6 à 8, **caractérisée par** un moyen de guidage permettant de guider le mouvement coulissant comprenant au moins un rail de guidage (48) fixé à l'un des éléments que sont le couvercle (4) ou le bâti (18) et un élément de guidage coulissant dans ledit rail de guidage (48) et fixé à l'autre de ces éléments, couvercle (4) ou bâti (18), dans laquelle ledit rail de guidage (48) présente une extrémité ouverte et dans laquelle, en position élevée, l'élément de guidage est reçu dans le rail de guidage (48) près de son extrémité ouverte.

10. Enceinte selon l'une quelconque des revendications 6 à 9, **caractérisée en ce que** ledit moyen de sollicitation (50) est prévu pour soulever ledit couvercle (4) vers la position élevée au cas où le couvercle (4) n'est pas sécurisé en position fermée.

11. Enceinte selon l'une quelconque des revendications précédentes, **caractérisée en ce que** l'enceinte comprend en outre une base (2) prévue pour être montée au-dessous du niveau du sol et définissant au moins un passage d'entrée de câble (61) et le bâti (18) définissant la section de montage (36) et/ou la section d'organisation (38) prévue pour être disposée au-dessus du niveau du sol et du couvercle (4) monté sur ledit bâti,
dans lequel ledit passage d'entrée de câble (61) se termine dans au moins une ouverture d'entrée (58) définie par ladite base (2) au-dessus du niveau du sol.

12. Enceinte selon la revendication 11, **caractérisée en ce que** ladite base définit un dôme (60), qui définit ladite au moins une ouverture d'entrée (58).

13. Enceinte selon la revendication 11 ou la revendication 12, **caractérisée par** une tige (72) fixée à ladite base (2) dans une extension horizontale.

14. Enceinte selon l'une quelconque des revendications 11 à 13, **caractérisée par** un élément de cheminée (106) prévu dans la base (2) et définissant un canal d'évacuation (118) pour l'air chauffé par un élément dissipateur de chaleur logé à l'intérieur de la base (2) pour s'élever à partir de la partie inférieure de ladite base (2).

15. Enceinte selon la revendication 14, **caractérisée en ce que** ledit élément de cheminée (106) présente une section transversale en forme de U prévue pour loger une enceinte (100) contenant un composant comprenant ledit au moins un élément dissipateur de chaleur (98).
